# NOUVEAU FASCICULE DE BREVET EUROPEEN

(11) **EP 0 279 721 B2**
(45) Date de publication et mention de la décision concernant l'opposition: **28.01.1998**
(45) Mention de la délivrance du brevet: 05.01.1994
(21) Numéro de dépôt: 88400144.7
(22) Date de dépôt: 22.01.1988
(51) Int. Cl.: C08G 18/64, C09J 163/00

(54) **Adhésif pour collage d'acier, notamment au ferrage automobile**
Klebemittel für Stahlverklebung, insbesondere bei der Automobilherstellung
Adhesive for steel, especially at motor car construction

(30) Priorité: 22.01.1987 FR 8700727
(43) Date de publication de la demande: 24.08.1988
(73) Titulaire: COMPAGNIE FRANCAISE DE PRODUITS INDUSTRIELS, F-92233 Gennevilliers (FR)
(72) Inventeur: Schapira, Joseph, F-75015 Paris (FR); Louis-Gavet, Paul, F-95680 Montlignon (FR); Maillard, Pierre, F-75013 Paris (FR)
(74) Mandataire: Koch, Gustave

(56) Documents cités:
- EP-A- 0 083 233
- EP-A- 0 143 120
- DE-A- 3 240 285
- Kunststoff-Handbuch, Band 7, Polyurethane, 1966, Seiten 718-732
- Kunststoff-Handbuch, Band 7, Polyurethane, 2. Auflage, 1983, Seiten 580-587
- Terokal-6000, Produktblatt der Fa. Teroson Gmbh, März 1985
- Handbook of Adhesives, 2nd edition, 1977, p. 795

## Description

L'invention concerne le collage d'acier, notamment au ferrage automobile.

Il est connu d'avoir recours dans l'industrie automobile à des adhésifs époxy pour réunir par collage des surfaces métalliques pouvant être grasses.

Les forces de liaison ainsi obtenues, déterminées sur éprouvettes standard selon la méthode d'essai des Constructeurs n° 1108 --réunion de deux plaquettes de tôle au moyen de l'adhésif (joint de colle: 25 mm x 20 mm x 0,2 mm) et mesure de la force nécessaire pour les désolidariser par tractions exercées dans le plan des plaquettes, le mode de rupture pouvant être "cohésif", "adhésif" ou "mixte cohésif-adhésif", la rupture cohésive étant recherchée-- sont supérieures à 8 MPa.

L'inconvénient du collage par adhésif époxy réside notamment dans le fait, d'une part, qu'entre le moment de l'application de l'adhésif et l'arrivée des pièces réunies par collage dans la zone de traitement de surface de la chaîne de montage, c'est-à-dire pendant une durée d'environ 2 à 4 heures, l'adhésif époxy n'a pas de propriétés d'adhérence, les déplacements l'une par rapport à l'autre de pièces solidarisées restant possibles et, d'autre part, qu'au niveau des zones de traitement de surface les bains mis en oeuvre provoquent un entraînement de l'adhésif non "cuit", d'où des inconvénients de pollution et daffaiblissement du joint de colle.

Il a été proposé de remédier à ces inconvénients en prévoyant une précuisson de la résine dont les inconvénients résident dans une mise en oeuvre coûteuse et difficultueuse.

L'invention a donc pour but de proposer l'utilisation d'un adhésif du genre en question répondant mieux que ceux qui existent déjà aux divers desiderata de la technique.

Et la Société Demanderesse a le mérite d'avoir trouvé à l'issue de recherches approfondies que ce but pouvait être atteint par l'utilisation pour le collage d'acier notamment au ferrage automobile applicable à l'acier ordinaire non dégraissé ou huilé ainsi qu'aux aciers du type électro-zingué ou galvanisé éventuellement regraissés, d'un adhésif assurant une force de liaison de l'ordre de 1 à 2 MPa à l'entrée de la zone de traitement de surface sans aucune précuisson, cet adhésif, qui est à base de polyuréthanes se présentant en système bicomposant, mettant en oeuvre, d'une part, des systèmes de polyols, utilisés seuls ou en mélanges binaires, ternaires et plus, modifiés par réaction avec une résine époxy et, d'autre part, du diisocyanate.

L'invention a également pour objet l'utilisation pour le collage d'acier notamment au ferrage automobile applicable à l'acier ordinaire non dégraissé ou huilé ainsi qu'aux aciers du type électro-zingué ou galvanisé éventuellement regraissés, d'un adhésif assurant une force de liaison de l'ordre de 1 à 2 MPa à l'entrée de la zone de traitement de surface sans aucune précuisson, cet adhésif, qui est à base de polyuréthanes se présentant en système bicomposant, lesdits polyuréthanes étant obtenus à partir, d'une part, de polyols modifiés, notamment de polyéthers d'indices d'hydroxyles compris entre 34 et 360, à partir de polyols polyesters d'indice d'hydroxyles compris entre 40 et 215 et à partir de polyols mixtes d'indices d'hydroxyles compris entre 120 et 200 et, d'autre part, de diisocyanate.

La résine époxy peut être une résine époxy du commerce, par exemple celle connue sous la marque "EPIKOTE 828" et commercialisée par Shell.

Les polyols entrant dans les systèmes notamment binaires et ternaires de polyols modifiés peuvent être des polyols polyéthers ou des polyols polyesters ou encore des polyols mixtes.

Ils sont identifiés par leur indice hydroxyle.

On a testé
- les polyols polyéthers d'indices hydroxyles compris entre 34 et 360, notamment de 34, 26, 25 et 360 (tous des triols ramifiés),
- les polyols polyesters d'indices hydroxyles compris entre 40 et 215, notamment de respectivement 40 (linéaire), 56 (linéaire), 60 (peu ramifié), 170 (semi-ramifié), 160 (ramifié), 215 (ramifié),
- le polyol mixte d'indice hydroxyle compris entre 120 et 200, notamment de 160-170 (ramifié).

A titre d'exemples, on indique ci-après les résistances au cisaillement des adhésifs conformes à l'invention à base des polyuréthanes obtenus à l'aide des trois mélanges binaires suivants de polyols modifiés, étant bien entendu que, dans la composition des polyuréthanes, entre par ailleurs comme connu du diisocyanate.

Les trois mélanges binaires sont les suivants :
a) 50% de diol de masse moléculaire 1000 et 50% de triol de masse moléculaire 450.
b) 65% d'un polyéther diol de masse moléculaire 1000 et 35% d'un polyéther triol de masse moléculaire 450
c) 66,6% d'un diol polyéther de masse moléculaire 400 et 33,3% d'un triol de masse moléculaire 400.

Les résistances au cisaillement déterminées par le test mentionné plus haut sont
- sur acier dégraissé, de 18 MPa, 8,8 MPa et 20,6 MPa pour respectivement a), b) et c), la rupture étant cohésive.
- sur acier huilé de 6,9 MPa, 8,3 MPa et 20,4 MPa pour respectivement a), b) et c), la rupture étant cohésive pour b), mixte pour a) et c).

Les valeurs de la résistance au cisaillement obtenues avec les adhésifs à base des deux mélanges ternaires d) et e) de polyols modifiés suivants sont indiquées plus loin :
d) 50% de diol de masse moléculaire 1000 25% de diol de masse moléculaire 400 25% de triol de masse moléculaire 400.
e) 50% de diol de masse moléculaire 1000 15% de diol de masse moléculaire 400 25% de triol de masse moléculaire 400.

Les résistances au cisaillement sont
- sur acier dégraissé, de 13,7 MPa pour d) et de 17,8 MPa pour e) avec rupture cohésive,
- sur acier huilé, de 13,3 MPa pour d) et de 18 MPa pour e) avec rupture mixte dans le premier cas et rupture cohésive dans le deuxième.

La résistance au vieillissement des adhésifs conformes à l'invention est dans l'ensemble satisfaisante.

Pour l'améliorer encore, on peut, conformément à l'invention, soit agir sur la technique de la modification des polyols entrant dans la constitution des adhésifs conformes à l'invention, soit faire comporter auxdits adhésifs une faible proportion d'additifs appropriés.

Dans le premier cas, il s'agit de sélectionner judicieusement les conditions de température et de durée de la réaction de modification, étant entendu que l'on fait réagir généralement de 0,5 à 4 moles de polyols avec environ 1 mole de résine époxy, plus particulièrement environ 2 moles de polyols avec environ 1 mole de résine époxy.

De bons résultats ont été obtenus en choisissant la température dans le domaine de 130 à 200°C et la durée dans le domaine de 3 à 24 heures.

En procédant ainsi, on peut améliorer la résistance au vieillissement (mesurée par un test de vieillissement accéléré) à un point tel que la résistance à la rupture au bout de plusieurs années (par exemple 5 ans) est doublée et la rupture améliorée.

Dans le deuxième cas, on fait comporter à l'adhésif une proportion généralement inférieure à 3% d'un additif pouvant être choisi parmi les silanes, les titanates d'alcoyle, les résines cétoniques, les résines acryliques et autres.

A titre d'exemple, on signale que
- parmi les silanes, on a utilisé avec succès ceux commercialisés sous les marques "GLYMO", "MERCAPTO", "DAMMO" par Dynamit Nobel et ceux commercialisés sous les dénominations "A 187", "A 189", "A 1120", "A1100" par Union Carbide, les proportions utilisées étant de 0,1 à 1% en poids par rapport à la masse d'adhésif ;
- parmi les résines cétoniques, on a enregistré de bons résultats avec la résine SK de Huls et la résine de marque "MACRYNAL" de Hoechst, la proportion étant de 1 à 2% ;
- parmi les résines acryliques, on a enregistré de bons résultats avec la résine DESMOPHEN A de Bayer utilisée à la proportion de 1 à 2%.

Ici encore, la résistance à la rupture peut être doublée après vieillissement de plusieurs années et la nature de la rupture est améliorée.

Outre la base constituée par le polyuréthane, les adhésifs conformes à l'invention peuvent comporter (exprimées en pourcentage en poids par rapport à la masse d'adhésif)
- des charges (10 à 55%) par exemple du CO₃Ca, du kaolin et autres,
- des plastifiants (2 à 10%) du type phtalate,
- des catalyseurs du type sel d'étain,
- des solvants (0,1 à 20%) pour contrôler la viscosité, tels que du xylène,
- des agents épaississants (0,1 à 5%) tels que des dérivés de silice,
- des pigments (0,1 à 15%) tels que le dioxyde de Ti et les noirs de carbone.

Les additifs conformes à l'invention permettent de coller non seulement l'acier ordinaire non dégraissé ou huilé mais aussi les aciers prérevêtus du type électro-zingué ou galvanisé même regraissés.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Utilisation pour le collage d'acier notamment au ferrage automobile applicable à l'acier ordinaire non dégraissé ou huilé ainsi qu'aux aciers du type électro-zingué ou galvanisé éventuellement regraissés, d'un adhésif assurant une force de liaison de l'ordre de 1 à 2 MPa à l'entrée de la zone de traitement de surface sans aucune précuisson, cet adhésf, qui est à base de polyuréthanes se présentant en système bicomposant, mettant en oeuvre, d'une part, des systèmes de polyols, utilisés seuls ou en mélanges binaires, ternaires et plus, modifiés par réaction avec une résine époxy et, d'autre part, du diisocyanate.

2. Utilisation pour le collage d'acier notamment au ferrage automobile applicable à l'acier ordinaire non dégraissé ou huilé ainsi qu'aux aciers du type électro-zingué ou galvanisé éventuellement regraissés, d'un adhésif assurant une force de liaison de l'ordre de 1 à 2 MPa à l'entrée de la zone de traitement de surface sans aucune précuisson, cet adhésif qui est à base de polyuréthanes se présentant en système bicomposant, lesdits polyuréthanes étant obtenus à partir, d'une part, de polyols modifiés, notamment de polyéthers d'indices d'hydroxyles compris entre 34 et 360, à partir de polyols polyesters d'indice d'hydroxyles compris entre 40 et 215 et à partir de polyols mixtes d'indices d'hydroxyles compris entre 120 et 200 et, d'autre part, de diisocyanate.

3. Utilisation selon la revendication 1 d'un adhésif à base de polyuréthane mettant en oeuvre des systèmes de polyols, utilisés seuls ou en mélanges binaires, ternaires et plus, modifiés par réaction avec une résine époxy et comportant une proportion inférieure à 3% d'un additif pouvant être choisi parmi les silanes, les titanates d'alcoyle, les résines cétoniques et les résines acryliques.

4. Utilisation selon la revendication 2 d'un adhésif à base de polyuréthanes obtenus à partir de polyols modifiés, notamment de polyéthers d'indices d'hydroxyles compris entre 34 et 360, à partir de polyols polyesters d'indices d'hydroxyles compris entre 40 et 215 et à partir de polyols mixtes d'indices d'hydroxyles compris entre 120 et 200 et comportant une proportion inférieure à 3% d'un additif pouvant être choisi parmi les silanes, les titanates d'alcoyle, les résines cétoniques et les résines acryliques.

5. Utilisation selon la revendication 1 d'un adhésif à base de polyuréthane mettant en oeuvre des systèmes de polyols, utilisés seuls ou en mélanges binaires, ternaires et plus, modifiés par réaction avec une résine époxy et comportant une proportion inférieure à 3% d'un additif pouvant être choisi parmi les silanes, les titanates d'alcoyle, les résines cétoniques et les résines acryliques, ainsi que
- des charges (10 à 55%) choisies dans le groupe comprenant du CO₃Ca, du kaolin,
- des plastifiants (2 à 10%) du type phtalate,
- des catalyseurs du type sel d'étain,
- des solvants (0,1 à 20%) pour contrôler la viscosité, tels que du xylène,
- des agents épaississants (0,1 à 5%) tels que des dérivés de silice,
- des pigments (0,1 à 15%) tels que le dioxyde de Ti et les noirs de carbone.

6. Utilisation selon la revendication 2 d'un adhésif à base de polyuréthanes obtenus à partir de polyols modifiés, notamment de polyéthers d'indices d'hydroxyles compris entre 34 et 360, à partir de polyols polyesters d'indices d'hydroxyles compris entre 40 et 215 et à partir de polyols mixtes d'indices d'hydroxyles compris entre 120 et 200 et comportant une proportion inférieure à 3% d'un additif pouvant être choisi parmi les silanes, les titanates d'alcoyle, les résines cétoniques et les résines acryliques, ainsi que
- des charges (10 à 55%) choisies dans le groupe comprenant du CO₃Ca, du kaolin,
- des plastifiants (2 à 10%) du type phtalate,
- des catalyseurs du type sel d'étain,
- des solvants (0,1 à 20%) pour contrôler la viscosité, tels que du xylène,
- des agents épaississants (0,1 à 5%) tels que des dérivés de silice,
- des pigments (0,1 à 15%) tels que le dioxyde de Ti et les noirs de carbone.

## Patentansprüche

1. Verwendung zur Stahlverklebung, insbesondere bei der Automobilherstellung, anwendbar auf herkömmlichen, nichtentfetteten oder geölten Stahl als auch auf Stähle des elektroverzinkten oder galvanisierten, gegebenfalls wiedergefetteten Typs, eines Klebemittels welches eine Verbindungskraft von etwa 1 bis 2 MPa am Eintritt des Oberflächenbehandlungsbereiches ohne Vorbrennen sicherstellt wobei dieses Klebemittel, welches auf Polyurethan basiert ist, in Form eines Bikomponentensystems vorliegt welches einerseits Systeme aus Polyolen, welche einzeln oder als binäre, ternäre und höhere Gemische verwendet werden, die durch Reaktion mit einem Epoxidharz modifiziert sind, und andererseits Diisocyanat ins Werk setzt.

2. Verwendung zur Stahlverklebung, insbesondere bei der Automobilherstellung, anwendbar auf herkömmlichen nichtentfetteten oder geölten Stahl als auch auf Stähle des elektroverzinkten oder galvanisierten, gegebenfalls wiedergefetteten Typs, eines Klebemittels welches eine Verbindungskraft von etwa 1 bis 2 MPa am Eintritt des Oberflächenbehandlungsbereiches ohne Vorbrennen sicherstellt wobei dieses Klebemittel, welches auf Polyurethan basiert ist, in der Form eines Bikomponentensystems vorliegt, wobei die Polyurethane einerseits ausgehend von modifizierten Polyolen, insbesondere Hydroxylzahlen zwischen 34 und 360 umfassenden Polyethern, Hydroxylzahlen zwischen 40 und 215 umfassenden Polyolpolyestern und Hydroxylzahlen zwischen 120 und 200 umfassenden gemischten Polyolen und andereseits ausgehend von Diisocyanat erhalten wurden.

3. Verwendung eines Klebemittels nach Anspruch 1 auf Polyurethanbasis unter Benutzung von Systemen aus Polyolen, welche einzeln oder als binäre, ternäre und höhere Gemische verwendet werden, die durch Reaktion mit einem Epoxidharz modifiziert sind und das einen Anteil von weniger als 3 % eines Additivs enthält, ausgewählt aus den Silanen, Alkyltitanaten, Ketonharzen und Acrylharzen.

4. Verwendung eines Klebemittels nach Anspruch 2 auf Polyurethanbasis, das, ausgehend von modifizierten Polyolen, insbesondere Bydroxylzahlen zwischen 34 und 360 umfassenden Polyethern, ausgehend von Hydroxylzahlen zwischen 40 und 215 umfassenden Polyolpolyestern und ausgehend von Hydroxylzahlen zwischen 120 und 200 umfassenden gemischten Polyolen, erhalten wurde und das einen Anteil von weniger als 3 % eines Additivs enthält, ausgewählt aus den Silanen, Alkyltitanaten, Ketonharzen und Acrylharzen.

5. Verwendung eines Klebemittels nach Anspruch 1 auf Polyurethanbasis unter Benutzung von Systemen aus Polyolen, welche einzeln oder als binäre, ternäre und höhere Gemische verwendet werden, die durch Reaktion mit einem Epoxidharz modifiziert sind und das einen Anteil von weniger als 3 % eines Additivs enthält, ausgewählt aus den Silanen, Alkyltitanaten, Ketonharzen und Acrylharzen sowie
- Beladungsmittel (10 bis 55 %), ausgewählt aus der CaCO₃, Kaolin umfassenden Gruppe,
- Weichmacher (2 bis 10 %) des Phthalattyps,
- Katalysatoren des Zinnsalztyps,
- Lösungsmittel (0,1 bis 20 %), wie etwa Xylol, zur Viskositätskontrolle,
- Verdickungsmittel (0,1 bis 5 %), wie etwa Silica-derivate,
- Pigmente (0,1 bis 15 %), wie etwa Titandioxid und Kohleschwarz.

6. Verwendung eines Klebemittels nach Anspruch 2 auf Polyurethanbasis, das, ausgehend von modifizierten Polyolen, insbesondere von Hydroxylzahlen zwischen 34 und 360 umfassenden Polyethern, ausgehend von Hydroxylzahlen zwischen 40 und 215 umfassenden Polyolpolyestern und ausgehend von Hydroxylzahlen zwischen 120 und 200 umfassenden gemischten Polyolen, erhalten wurde und das einen Anteil von weniger als 3 % eines Additivs enthält, ausgewählt aus den Silanen, Alkyltitanaten, Ketonharzen und Acrylharzen, sowie
- Beladungsmittel (10 bis 55 %), ausgewählt aus der CaCO₃, Kaolin umfassenden Gruppe,
- Weichmacher (2 bis 10 %) des Phthalattyps,
- Katalysatoren des Zinnsalztyps,
- Lösungsmittel (0,1 bis 20 %), wie etwa Xylol, zur Viskositätskontrolle,
- Verdickungsmittel (0,1 bis 5 %), wie etwa Silica-derivate,
- Pigmente (0,1 bis 15 %), wie etwa Titandioxid und Kohleschwarz.

## Claims

1. Use for the bonding of steel, especially for motor car construction, proper to be used on ordinary non-degreased or oiled steel as well as on steels of the electroplated or electrotinned type, possibly regreased, of an adhesive product providing a bonding strength in the order of 1 to 2 MPa when entering the surface treatment area, without any previous baking, this adhesive product, which is based on polyurethanes being in the form of a two-component system, implementing, on the one hand, polyol systems, used alone or in the form binary or ternary polyol mixtures or mixtures of more than three polyols, modified by reaction with an epoxy resin and, on the other hand, diisocyanate.

2. Use for the bonding of steel, especially for motor car construction, proper to be used on ordinary non-degreased or oiled steel as well as on steels of the electroplated or electrotinned type, possibly regreased, of an adhesive product providing a bonding strength in the order of 1 to 2 MPa when entering the surface treatment area, without any previous baking, this adhesive product, which is based on polyurethanes, being in the form of a two-component system, said polyurethanes being obtained, on the one hand, from modified polyols, particularly from polyethers having hydroxyl numbers comprised between 34 and 360, from polyester polyols having hydroxyl numbers comprised between 40 and 215 and from mixed polyols having a hydroxyl number comprised between 120 and 200 and, on the other hand, from diisocyanate.

3. Use according to claim 1 of an adhesive product based on polyurethane implementing polyol systems, comprising either one polyol or binary or ternary polyol mixtures or mixtures of more than three polyols, modified by reaction with an epoxy resin and containing an amount lower than 3% of an additive which can be selected from the silanes, alkyltitanates, ketonic resins and acrylic resins.

4. Use according to claim 2 of an adhesive product based on polyurethanes obtained from modified polyols, particularly from polyethers having hydroxyl numbers comprised between 34 and 360, from polyester polyols having hydroxyl numbers comprised between 40 and 215 and from mixed polyol having a hydroxyl number comprised between 120 and 200 and containing an amount lower than 3% of an additive which can be selected from the silanes, alkyltitanates, ketonic resins and acrylic resins.

5. Use according to claim 1 of an adhesive product based on polyurethane implementing polyol systems, comprising either one polyol or binary or ternary polyol mixtures or mixtures of more than three polyols modified by reaction with an epoxy resin and containing an amount lower than 3% of an additive which can be selected from the silanes, alkyltitanates, ketonic resins and acrylic resins, as well as
- fillers (10 to 55%) selected from the group comprising CO₃Ca, kaolin,
- plasticizers (2 to 10%) of the phthalate-type,
- catalysts of the tin salt-type,
- solvents (0.1 to 20%) in order to control the viscosity, such as xylene,
- thickening agents (0.1 to 5%) such as silica derivatives,
- pigments (0.1 to 15%) such as titania or titanium (IV) oxide and carbon blacks.

6. Use according to claim 2 of an adhesive product based on polyurethanes obtained from modified polyols, particularly from polyethers having hydroxyl numbers comprised between 34 and 360, from polyester polyols having hydroxyl numbers comprised between 40 and 215 and from mixed polyol having a hydroxyl number comprised between 120 and 200 and containing an amount lower than 3% of an additive which can be selected from the silanes, alkyltitanates, ketonic resins and acrylic resins, as well as
- fillers (10 to 55%) selected from the group comprising CO₃Ca, kaolin,
- plasticizers (2 to 10%) of the phthalate-type,
- catalysts of the tin salt-type,
- solvents (0.1 to 20%) in order to control the viscosity, such as xylene,
- thickening agents (0.1 to 5%) such as silica derivatives,
- pigments (0.1 to 15%) such as titania or titanium (IV) oxide and carbon blacks.
